# EUROPÄISCHE PATENTSCHRIFT

(11) **EP 3 133 450 B1**
(45) Veröffentlichungstag und Bekanntmachung des Hinweises auf die Patenterteilung: **08.07.2020**
(21) Anmeldenummer: 15181199.9
(22) Anmeldetag: 17.08.2015
(51) Int. Cl.: G05B 19/18, G05B 19/418, G06T 19/00, G06T 15/40

(54) **VERFAHREN UND VORRICHTUNG ZUR AUTOMATISIERTEN ERMITTLUNG EINES WIRKUNGSBEREICH FÜR EINE BEDIENEINRICHTUNG IN EINER ANLAGE**
METHOD AND DEVICE FOR THE AUTOMATED DETERMINATION OF A REGION OF ACTION FOR AN OPERATING DEVICE IN A FACILITY
PROCEDE ET DISPOSITIF DE DETERMINATION AUTOMATISEE D'UNE ZONE D'ACTION POUR UN DISPOSITIF DE COMMANDE DANS UNE INSTALLATION

(43) Veröffentlichungstag der Anmeldung: 22.02.2017
(73) Patentinhaber: Siemens Aktiengesellschaft, 80333 München (DE)
(72) Erfinder: NEIDIG, Jörg, 90419 Nürnberg (DE)

(56) Entgegenhaltungen:
- EP-A1- 2 020 626
- US-A1- 2014 277 613
- US-A1- 2015 032 293

## Beschreibung

Der sogenannte "Nothalt" ist eine wichtige und vorgeschriebene Sicherheitsanforderung in technischen Anlagen.
Es wird dabei im Allgemeinen unterschieden zwischen dem Nothalt (emergency stop), welches ein Stillsetzen eines Anlagenteils und damit das Verhindern einer gefahrbringenden Bewegung bewirkt, und dem Notstop (emergency switching off), welches das Ausschalten, also das Trennen von der Versorgungsspannung des Anlagenteils und damit die Verhinderung von Risiken durch elektrische Spannungen in der Anlage bewirkt. In der folgenden Beschreibung werden wir uns ausschließlich auf den Nothalt beziehen, bei dem es darum geht, eine Bewegung möglichst schnell zu stoppen.

Die Anforderungen für den Nothalt sind in verschiedenen internationalen Normen standardisiert. So gibt es die Anforderungen nach DIN EN ISO 13850, "Sicherheit von Maschinen - Not-Halt - Gestaltungsleitsätze" welche beispielsweise auch die Form, Farbe, Bedienbarkeit und Anbringung der Betätigungseinrichtung bzw. Befehlsgeräte für den Nothalt spezifiziert, z. B. als Taster, Griff oder Schalter.

Eine weitere für das Thema relevante Norm ist die DIN EN 60204-1 mit dem Titel "Sicherheit von Maschinen - Elektrische Ausrüstungen von Maschinen". Zweck des Regelwerks ist es, gefahrbringende Situationen und deren Risiken zu vermeiden und Sicherheitsmaßnahmen während der Konstruktion zu berücksichtigen. Darüber hinaus sollen dadurch Wartungs- und Reparaturmaßnahmen erleichtert werden, die Maschinen zuverlässiger werden und leichter zu bedienen sein.

In den oben genannten Normen wird gefordert, dass die Nothalt-Betätigungseinrichtungen leicht und schnell erreichbar sein müssen. Weiterhin ist es Voraussetzung für die Benutzung dieser Betätigungseinrichtungen, dass sie in ausreichender Zahl vorhanden sind, die Gefahrstellen von ihrem Betätigungsort aus überschaubar sind, und dass die Zuordnung eines zugehörigen Teilbereichs zur Betätigungseinrichtung eindeutig ist.

Eine wichtige Anforderung ist daher, dass die Aktivierung der Betätigungseinrichtung für den Nothalt die offensichtliche Sicherheitssituation löst. Das heißt, es muss instinktiv klar sein, welches Gerät, welcher Anlagenteil oder welche Maschine gestoppt wird. Wenn keine eindeutige Begrenzung der Maschine oder des Anlagenteils wahrgenommen werden kann (beispielsweise durch eine geeignete Markierung) wird erwartet, dass alle sicherheitsrelevanten Situationen gelöst werden, die sich im direkten Sichtfeld der die Betätigungseinrichtung auslösenden Person befinden. Des Weiteren sollte das Betätigen der Betätigungseinrichtung keine weiteren, gegebenenfalls negativen Auswirkungen auf Maschinen der Anlage haben, die sich nicht im Sichtfeld der Person befinden.
Im Folgenden wird vom Bedienbereich (der Betätigungseinrichtung) die Rede sein, hiermit wird die Menge von Orten in der Anlage bezeichnet welche einer bestimmten Betätigungseinrichtung quasi zugewiesen ist und für die die oben beschriebenen Bedingungen gelten.

Ein angemessenes Safety-Konzept zur Umsetzung der durch die Norm vorgegebenen Anforderungen in der Anlage wird derzeit erst erzeugt, nachdem das Layout der Anlage und Maschinen endgültig festgelegt wurde. Damit sind in erster Linie die Informationen bezüglich der örtlichen Positionierung der Anlagenteile in der Anlage gemeint sowie auch die Wirkbeziehungen der einzelnen Anlagenteile untereinander.

Bislang wird dieses Konzept in der Regel manuell erzeugt. Das so erzeugte Konzept wird dann fixiert und dokumentiert.

In modernen flexiblen Anlagen, wie sie insbesondere in der Zukunft immer häufiger zu finden sein werden (Cyberphysical Systems, Industrie 4.0 Initiative, siehe unten) soll das Layout der Anlage dynamisch änderbar sein, angepasst an die Auslastung der Anlage, das aktuell produzierte Produkt oder andere Faktoren. In einer solchen Umgebung ist es häufig nicht möglich, das geforderte vollständige Safety-Konzept vorab auszuarbeiten.

Das Problem wird durch die Verwendung von dezentralen Strukturen noch weiter verschärft, beispielsweise wenn jede einzelne Maschine als cyber-physisches System behandelt wird, also den Verbund informatischer, softwaretechnischer Komponenten mit mechanischen und elektronischen Teilen, die über eine Dateninfrastruktur, wie z. B. das Internet, kommunizieren. Ein cyber-physisches System ist durch seinen hohen Grad an Komplexität gekennzeichnet. Die Ausbildung von cyberphysischen Systemen entsteht aus der Vernetzung eingebetteter Systeme durch drahtgebundene oder drahtlose Kommunikationsnetze. In einer solchen Umgebung ist es daher quasi unmöglich, vorab ein Sicherheitskonzept zu erstellen. Dieses Problem wird in einer dezentralen Umgebung noch verstärkt, beispielsweise wenn jede Maschine / jeder Anlagenteil als cyberphysisches System behandelt wird mit nur eingeschränktem Wissen über den jeweiligen Kontext, in dem sie eingesetzt ist.

Eine produktionstechnische Anlage oder Fabrik besteht aus einer Menge von interagierenden, teilweise autarken Maschinen. In einer modernen Produktions-Anlage sollen diese Maschinen dynamisch arrangierbar sein, insbesondere ist es auch möglich, den jeweiligen örtlichen Einsatzbereich zwischendurch zu ändern. Es ist daher sehr wichtig, den Engineering-Aufwand einer solchen neuartigen Anlage für einen gewünschten Umbau auf ein Minimum zu reduzieren und insbesondere den Bedarf an manueller Planung zu vermeiden.

In der US 2014/0277613 A1 wird eine mobile Nothalt-Betätigungseinrichtung (control device) welche sich in ein Echtzeit-Netzwerk mit einer Anlage verbinden kann und so bestimmte Nothalt-Kommandos auszuführen.

In der US 2015/0032293 A1 ist ein offenes System mit führerlosen Fahrzeugen und Robotern beschrieben, wobei Anwesenheits- Orte und Abstände zwischen den Fahrzeugen gemessen und die Kommunikationsverbindungen ausgewertet werden und entsprechend ausgewertet werden, und im Falle einer Unterbrechung der Kommunikationsverbindung einen Nothalt auslösen.

Die EP 2 020 626 A1 lehrt ein Verfahren zur Verwaltung von Mobilen Bediengeräten zur Bedienung einer Maschine innerhalb eines zugeordneten Wirkbereichs. Abhängig von Zustandsinformationen eines Bediengeräts und der Anmeldung in einem durch RFID Transponder beschränkten Wirkbereichs werden Nothalt-Ausgänge geschaltet.

Die Aufgabe der Erfindung liegt daher darin, ein Verfahren und eine Vorrichtung anzugeben, dass eine Berechnung eines Wirkungsbereich für eine Betätigungseinrichtung, im Folgenden auch Nothalt-Knopf genannt, unter den oben genannten Bedingungen automatisiert ermöglicht.

Die Aufgabe wird gelöst durch ein Verfahren zum Festlegen eines sichtbaren Wirkungs-Bereiches ausgehend von einem Bedienbereich innerhalb einer industriellen Anlage, bestehend aus einzelnen miteinander in Wirkverbindung stehenden, in einem Raum verteilten Anlagenteilen, mit Hilfe eines ersten dreidimensionalen Modells für den die Anlage umfassenden Raum, und mit einem zweiten dreidimensionalen Modell für die äußeren Begrenzungen für jeden Anlagenteil unter Berücksichtigung der Transparenz des jeweiligen Anlagenteils, und Informationen zur räumlichen Orientierung und Ausrichtung der Anlagenteile im Modell des Raumes und / oder der Anlage, mit folgenden Schritten:
a) Ermitteln eines ersten möglichen Standpunktes innerhalb des Bedienbereichs,
b) Ermitteln der von diesem Standpunkt aus sichtbaren Anlagenteile basierend auf dem ersten Modell des Raumes und dem zweiten Modell der Anlagenteile sowie der Informationen über die Ausrichtung der Anlagenteile mit Hilfe eines Strahlverfolgungsalgorithmus,
c) Feststellen ob ausreichend viele Standpunkte innerhalb des Bedienbereiches (AA) berücksichtigt wurden und weiter mit Schritt e) oder Ermitteln eines weiteren möglichen Standpunkts,
d) Durchführen von Schritt b) auf den weiteren Standpunkt,
e) Ermitteln der von dem Bedienbereich sichtbaren Anlagenteile durch Auswerten der Ergebnisse aus Schritt b) und
f) Umsetzen der Ergebnisse aus Schritt e) zur Nothalt-Knopf-Aktivierung.

### Weiterhin wird die Aufgabe gelöst mit einer Vorrichtung gemäß Patentanspruch 11

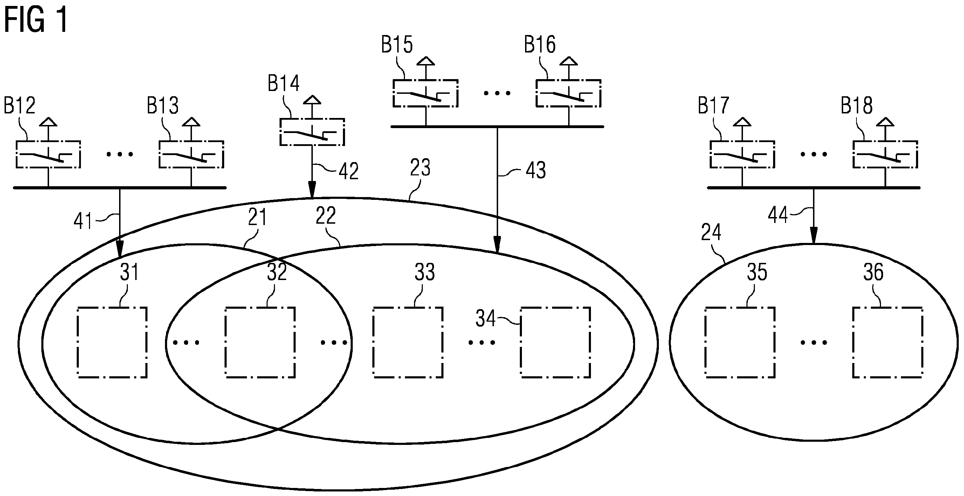

Durch das erfindungsgemäße Verfahren lässt sich in vorteilhafter Weise den sogenannten Wirkungsbereich eines Nothalt-Knopfs automatisiert bestimmen. Unter dem Wirkungsbereich versteht man dabei den von dem jeweiligen Nothalt-Knopf in einen Nothalt versetzbaren Anlagenteil. Bei dem Anlagenteil kann es sich dabei um einzelne Maschinen oder um eine Menge von Maschinen oder Geräten handeln. Bei dem Einsatz von mehr als einem Nothalt-Knopf in einer Anlage ist es auch möglich, dass die jeweiligen Wirkungsbereiche der einzelnen Nothalt-Knöpfe sich überlappen, also eine Maschine durch 2 oder mehr unterschiedliche Nothalt-Knöpfe zum Halt gebracht werden kann. Dies ist in Figur 1 schematisch dargestellt. Die Nothaltknöpfe B12 ... B18 haben Auswirkungen auf die im jeweiligen Wirkungsbereich 21 ...24 liegenden Anlagenteile 31 ...36. Dabei befinden sich die Anlagenteile 31, 33, 34 in zwei Wirkungsbereichen und der Anlagenteile 32 in drei Wirkungsbereichen. Ebenso ist es möglich, dass mehrere Nothalt-Knöpfe B12 ... B13 auf den gleichen Wirkungsbereich wirken.

Der Nothalt-Knopf bewirkt dabei dass die jeweils im Wirkungsbereich liegenden Anlagenteile sofort und ohne weiteren Eingriff durch Bedienpersonal in einen sicheren Status (beispielsweise gemäß der oben genannten Normen) überführt werden.

Der Übergang der einzelnen Anlagenteile in einen sicheren Zustand ist an sich bereits bekannt. Dabei ist es für jede einzelne Anlagenteile auch bereits festgelegt, welche Hilfs-Mechanismen und Vorrichtungen gegebenenfalls noch benötigt werden um den bezeichneten Anlagenteil in den sicheren Zustand zu überführen, beispielsweise Anforderungen an den Luftdruck, Strombedarf, oder ähnliches.

Für jeden Anlagenteil wird ein einfaches dreidimensionales (3D) Modell der Kontur oder Umrisse angelegt. Es ist dabei ausreichend, ein statisches Modell zu erzeugen, es ist nicht erforderlich die möglichen Bewegungen des Anlagenteils ebenfalls in dem Modell nachzubilden. Wichtig sind dabei transparente Teile der Maschine, oder solche, mit Aussparungen oder durch die aus anderen Gründen hindurch gesehen werden kann, diese müssen dabei als solche auch modelliert werden.

Es wird weiterhin ein Modell, von dem Raum in dem sich die Anlage befindet, benötigt. Wichtig sind dabei, wie auch bei dem Modell der Anlagenteile, die Informationen über sichtbehindernde Umstände innerhalb des Raumes, beispielsweise Säulen, Ecken oder Wände. Weiterhin ist es vorteilhaft, wenn die jeweilige Maschine Informationen zu seiner eigenen Ausrichtung/Orientierung innerhalb des Raumes hat.

In einer vorteilhaften Ausführungsform der Erfindung hat jeder Anlagenteil Zugriff hat auf sein eigenes 3D Modell und verfügt auch über ausreichende Rechenkapazität, um notwendige Berechnungen hierzu lokal auszuführen. Dabei ist zu beachten, dass die Maschine in diesem Fall eine Berechnung auch nur innerhalb der ihr bekannten Umgebung durchführen kann.

Weiterhin ist es für eine dezentrale Lösung erforderlich, dass die Teilanlage in der Lage ist, mit anderen Teilanlagen (in der Anlage) zu kommunizieren um Zwischenergebnisse und Ergebnisse der jeweiligen Berechnungen auszutauschen.

Für die Berechnung wird weiterhin davon ausgegangen, dass sich ein potentieller Benutzer eines Nothalt-Knopfes in einem gewissen näheren Umfeld des jeweiligen Knopfes aufhält (dem Bedienbereich), von dem aus die betroffene Anlagenteil/e zumindest teilweise sichtbar sein müssen.

Die Erfindung wird im Weiteren durch Figuren näher erläutert. Dabei zeigen die Figuren wie folgt:
Figur 1 ein Beispiel für ein Modell der Anlagenteile und Wirkbereiche (sphere of action)
Figur 2 eine beispielhafte Anordnung einer Anlage bestehend aus vier Anlagenteilen
Figur 3 die beispielhafte Anlage mit Blickwinkel des Betrachters

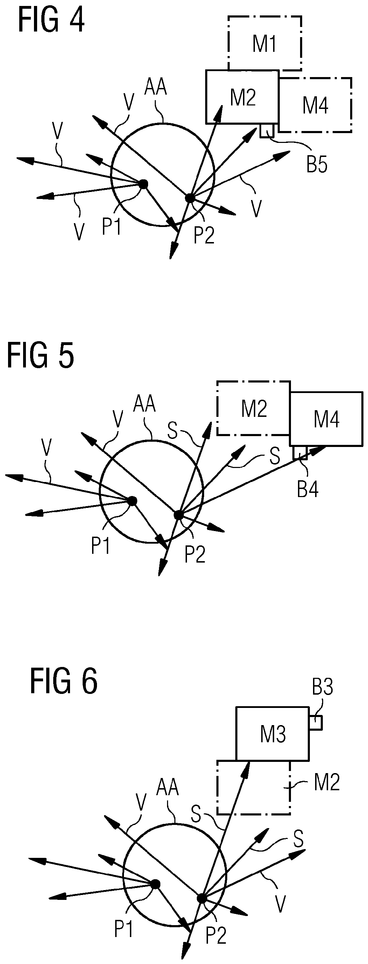

Figuren 4 bis 6 zeigt das Ergebnis des Verfahrens für die einzelnen Anlagenteile und
Figuren 7 bis 9 das Ergebnis in einem zweiten Ausführungsbeispiel.

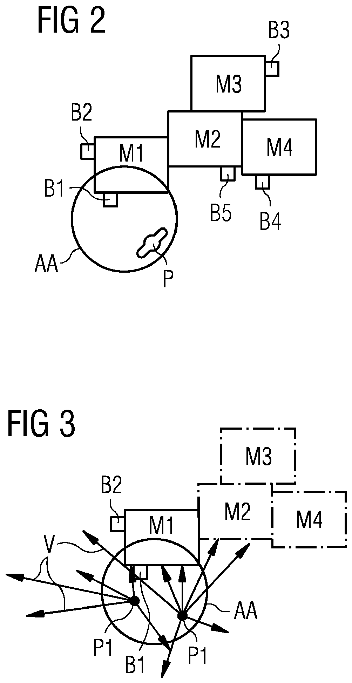

Figur 2 zeigt ein Arrangement von Anlagenteilen M1, ... M4 zu einer Gesamtanlage. Eine Bedienperson P hat einen Aktionsradius, der seinen Bedienbereich AA beschreibt. Die einzelnen Anlagenteile sind mit den notwendigen Nothalt-Knöpfen B1 bis B5 gemäß Norm ausgestattet. Wichtig ist dabei, dass die Knöpfe so angebracht sind, dass die Bedienperson B innerhalb ihres Bedienbereichs AA zumindest einen der Nothaltknöpfe im Blickfeld hat - also dass diese nicht durch andere Anlagenteile verdeckt sind. Im Fall von Figur 2 befindet sich der Nothaltknopf B1 am Anlagenteil M1 im Sichtbereich der Bedienperson P, wohingegen der Knopf B2 durch den Anlagenteil M1 verdeckt ist.

In Figur 3 wird durch die Pfeile symbolisiert, welche Bereiche des Anlagenteils M1 sich im Sichtfeld einer Bedienperson P1, P2 ausgehend von diesen Positionen innerhalb des Aktionsradius AA befinden. Dabei ist erkennbar, dass sich weitere Anlagenteile M2 und M4 ebenfalls im Sichtfeld befinden. Anlagenteil M3 wird dagegen komplett durch andere Anlagenteile verdeckt.

Im Einzelnen werden in einer ersten Ausführungsform mit dezentraler Lösung folgende Schritte durchgeführt:
1. Nothalt-Knopf B1 wird an Anlagenteil M1 angebracht.
2. Anlagenteil M1 berechnet (für einen ausgewiesenen Bedienbereich AA, activation area, in dem sich ein Bedienpersonal P befinden kann) in der Anlage mittels Raytracing Methode (auch Strahlverfolgung genannt, die bereits bekannt und ausgereift ist für die Berechnung von 3-D Grafiken) welche weiteren Anlagenteile von dem Bedienpersonal Standpunkt P sichtbar ist. Es werden also mittels eines auf Simulation der Aussendung von Strahlen basierenden Algorithmus zur Verdeckungsberechnung bzw. Ermittlung der Sichtbarkeit von dreidimensionalen Objekten von einem bestimmten Punkt im Raum aus die Regionen in der Anlage welche von dem Anlagenteil M1 nicht verdeckt sind.
3. M1 versendet die ermittelten Informationen (beispielsweise den Vektor der verwendeten Strahlen, also Anfangskoordinate und Richtung) an alle anderen betroffenen Anlagenteile M2 bis Mn. Diese Strahlenvektoren werden markiert als Quelle, entsprungen von Bedienknopf B1.
4. Da Anlagenteil Mx (x = 2 bis n) seine eigene Position kennt und Zugriff hat auf das 3D Modell des Anlagenraumes, kann er nun berechnen, ob es von den jeweiligen Strahlen getroffen worden wäre.
   Mx markiert diese Strahlen als "von Mx verschattet" und "von Bedienknopf B1 stammend", und versendet die zusätzliche Information an alle anderen Anlagenteile mit Ausnahme von M1.
5. Führe Schritt 4 durch für Mx+1 bis x+1 == n.
6. Jeder Anlagenteil kann nun aufgrund der von den anderen Anlagenteilen erhaltenen Informationen berechnen, ob er von dem Bedienbereich B aus sichtbar oder durch einen anderen Anlagenteil verdeckt (bzw. verschattet) ist.
   Die Berechnung kann beispielsweise erfolgen durch Verwendung der Menge der Strahlen "von Mx verschattet und von Bedienbereich AA ausgehend" abzüglich der Strahlen, welche als "von My verschattet" gekennzeichnet sind, wobei y = 2 bis n, ohne x. Als Ergebnis erhält man die Anzahl der Strahlen welche bei Mx eintreffen ohne von anderen Anlagenteilen verschattet zu werden.
   Wenn nun das Ergebnis eine hinreichend große Anzahl von auftreffenden Strahlen ergibt bzw. eine ausreichend große Fläche als "sichtbar" gekennzeichnet ist, dann betrachtet sich Mx als "sichtbar von Bedienbereich AA aus" und meldet dies entsprechend an M1.
   Die genannten Parameter zur Definition, wann ein Objekt als sichtbar gekennzeichnet wird, können entsprechend der lokalen Vorschriften eingestellt werden. Beispielsweise könnte gefordert werden, dass sobald mehr als 10% der Außenfläche eines Objekts sichtbar ist, das Objekt als sichtbar gekennzeichnet wird.
7. Schritte 1 bis 6 werden für alle Bedienbereiche bzw. Nothaltknöpfe wiederholt.

Die notwendigen Berechnungen können auch, ggf. auch teilweise auf weitere Recheneinheiten ausgelagert werden. Dies ist insbesondere vorteilhaft, wenn die Anlagenteile selber nicht über die notwendige Rechenkapazität verfügen.

In einer weiteren Ausführungsform der Erfindung wird die Berechnung in einem zentralen Ansatz durchgeführt.

Für jeden Nothalt-Knopf B1 ... Bm werden folgende Schritte durchgeführt:
1a. Auswahl eines lokalen Bedienbereichs um Nothalt-Knopf Bx (Activation Area AA) In diesem Bedienbereich AA wird sich voraussichtlich ein Bedienpersonal P1, P2 aufhalten, wenn eine Situation beobachtet wird, welche die Betätigung des Nothalt-Knopfes erforderlich macht. Die maximale Entfernung des Bedienpersonals zu dem Nothalt-Knopf kann voreingestellt werden, oder angepasst an Vorgaben, beispielsweise aus nationalen Vorschriften oder Normen werden. Diese Bedienbereiche enthalten keine Bereiche, die nicht von Menschen betreten werden können.
1b. Eine Augenhöhe und maximale Sichtweite eines (durchschnittlichen) Bedienpersonals wird festgelegt.
1c. Von jedem (ausreichend vielen) Punkte des Bedienbereichs aus berechnet das System die direkte Sichtlinie / Blickachse unter Verwendung des zuvor festgelegten 3D-Modells und beispielsweise eines Raytracing Verfahrens oder eines anderen, an sich bekannten Algorithmus zur Verdeckungsberechnung.
1d. Für jede Anlagenteil M1 bis Mn werden folgende Schritte durchgeführt:
   - Berechne die Fläche welche von der Blickachse getroffen wird (sichtbare Fläche). Raytrace: Fasse die Strahlen zusammen, welche den Anlagenteil treffen.
   - Wenn die sichtbare Fläche (Raytrace: die Anzahl der Strahlen) eine (vorab) bestimmten Anteil der Oberfläche des Anlagenteil-Modells übersteigt dann wird dieser Anlagenteil als "sichtbar" markiert und die den Anlagenteil inhärenten - für den Übergang in einen sicheren Zustand erforderlichen Mechanismen und Funktionen als "notwendig" markiert.
1e. Ergebnis für den Nothaltknopf Bx wird als Aktivierungsbereich die Menge aller als "sichtbar" markierten Anlagenteile. Die benötigten Hilfs-Funktionen dürfen nicht abgeschaltet werden.
2. Ergebnis: für jeden Nothalt-Knopf wird der Wirkungsbereich berechnet. Die Menge an gegebenenfalls benötigten Reserve Teilanlagen, die nicht ausgeschaltet werden dürfen, wird ebenfalls berechnet.
3. Sobald für jeden Nothalt-Knopf die Berechnungen durchgeführt wurden, werden im System die Ergebnisse umgesetzt, beispielsweise durch das Hinzufügen von Aufrufen der geeigneten Sicherheitsfunktionen zu der Ereignis-Steuerungsfunktion (Event Handler) zur Nothalt-Knopf Aktivierung.

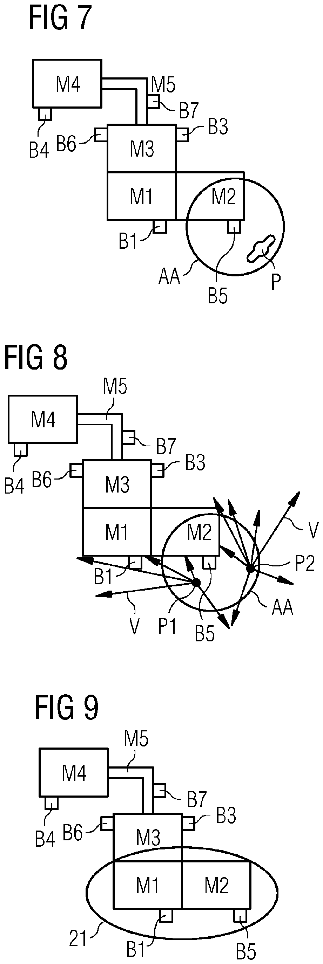

Figur 7 zeigt den Aufbau von miteinander interagierenden Anlagenteilen M1 ... M5. Der Bedienbereich (also die Fläche in der sich das Bedienpersonal P theoretisch aufhalten kann wenn ein Notfall beobachtet wird der die Betätigung des Nothalt-Knopfes erforderlich macht) von Anlagenteil M2 ist angedeutet AA. An den Anlagenteilen sind jeweils Nothaltknöpfe Ba ... B7 angebracht.

In Figur 8 ist dargestellt, wie aus dem Bedienbereich exemplarisch von den Punkten P1 und P2 aus getestet wird, indem Strahlen V nach Raytracing Methode mittels einer zentralen Instanz berechnet werden.
Das Ergebnis der Berechnung wird dann in Figur 9 dargestellt. Insbesondere wird klar, dass die Betätigung eines der beiden Nothalt-Knöpfe B1 oder B5 als Wirkungsbereich jeweils beide Anlagenteile M1 und M2 umfasst.

In einer weiteren vorteilhaften Ausführungsform wird die Berechnung in einer Mischung aus zentralem und dezentralem Ansatz ausgeführt. Hierbei kann beispielsweise ein untergeordnetes System für eine Untermenge an Anlagen-Teilen verantwortlich sein.

Das erfindungsgemäße Verfahren ermöglicht die automatisierte Berechnung des Wirkungsbereichs eines Nothaltknopfes.
Mit dem dezentralisierten Ansatz benötigt man kein weiteres zentrales übergeordnetes System oder einen Koordinator. Dies ist besonders vorteilhaft für einen Einsatz in neuartigen cyberphysikalischen Systemen.

In einer weiteren Ausführungsform kann auch auf kleinere Layout-Änderungen der Anlage reagiert werden, wenn diese während der Berechnungsphase passieren. Um den Berechnungsaufwand möglichst klein zu halten, kann das folgende Vorgehen vorgeschlagen werden, um die Neuberechnung auf die notwendigen Anlagen-Teile zu beschränken.

Die Anlage besteht aus den Anlagenteilen M1 bis Mn mit den Nothaltknöpfen B1 bis Bm. Die Berechnung der Wirkbereiche ist noch im Gange oder auch bereits abgeschlossen. Nun soll die die Position des Anlagenteils Ma verändert werden.
Wenn die Berechnung noch im Gange ist, dann wird diese temporär unterbrochen. Es wird nun (von einem übergeordneten System welches die Berechnung durchführt oder steuert) angenommen, dass der Anlagenteil, welcher seine Position verändert hat, selber von einem Art lichtemittierenden Bereich umgeben ist. Es wird nun mit Hilfe von Raytracing oder anderen Rendering Verfahren berechnet, welche anderen Anlagenteile von diesen Lichtstrahlen getroffen werden würden, analog zu den oben beschriebenen Verfahren. Wenn der Anlagenteil Mb getroffen wird, so wird weiter angenommen, dass dieser Anlagenteil von Anlagenteil Ma aus sichtbar ist und umgekehrt. Wenn Mb Teil des Wirkungsbereichs ist, dann wird dieser Wirkungsbereich aufgehoben und der Nothalt-Knopf wird der Liste der Nothalt-Knöpfe hinzugefügt, für die die Berechnung des Wirkungsbereichs neu durchgeführt werden muss. Wenn Anlagenteil Ma über einen Nothalt-Knopf verfügt, so muss auch dieser der Liste hinzugefügt werden.

Vorteilhafterweise wird durch das System ein manuelles Überschreiben der automatisch berechneten Werte ermöglicht. Insbesondere kann ein Bediener definieren, dass ein Anlagenteil oder eine Menge von Anlagenteilen getrennt ist vom Rest der Anlage. In diesem Fall wird durch die Standards festgelegt, dass der Bedienbereich AA beschränkt ist auf diese Anlagenteile, und wird nicht verwendet um den Bedienbereich etwa zu vergrößern.
Dabei ist es auch möglich, dass Anlagenteile vom Bediener als eindeutig abgetrennt vom Rest der Anlage definiert werden. In diesem Fall wird der Wirkungsbereich gemäß Vorgaben der Normen auf den/die jeweiligen Anlagenteil/e beschränkt sind.

In einer weiteren vorteilhaften Ausführungsform wird das beschriebene System verwendet um ein vorhandenes SicherheitsKonzept für eine Anlage dahingehend zu überprüfen, ob die von den Normen vorgegebenen Anforderungen eingehalten sind.

### Bezugszeichenliste

- AA: Bedienbereich (Activation Area)
- B1, ... Bx: Bedienelement, Nothalt-Knopf
- M1 ... M4: Anlagenteil
- P, P1, P2: Bedienperson
- V: Vektor
- 21 ... 24: Wirkungsbereich (Sphere of Action)
- 31 ... 36: Anlagenteil
- 41... 44: hat Auswirkung auf

## Patentansprüche

1. Verfahren zum Festlegen eines Wirkungsbereichs eines Nothalt-Knopfes in einem Bedienbereich (AA) innerhalb einer industriellen Anlage, bestehend aus einzelnen miteinander in Wirkverbindung stehenden, in einem Raum verteilten Anlagenteilen (B1 ... B4, B12 ... B18),
mit einem ersten dreidimensionalen Modell für den die Anlage umfassenden Raum, und
mit einem zweiten dreidimensionalen Modell für die äußeren Begrenzungen für jeden Anlagenteil unter Berücksichtigung der Sichtbarkeit des jeweiligen Anlagenteils (B1 ... B4, B12 ... B18), und
Informationen zur räumlichen Ausrichtung der Anlagenteile im Modell des Raumes,
mit folgenden Schritten:
a) Ermitteln eines ersten möglichen Standpunktes (P1) innerhalb des Bedienbereichs (AA),
b) Ermitteln der von diesem Standpunkt (P1) aus sichtbaren Anlagenteile basierend auf dem ersten Modell des Raumes und dem zweiten Modell der Anlagenteile sowie der Informationen über die Ausrichtung der Anlagenteile mit Hilfe eines Strahlverfolgungsalgorithmus (V),
c) Feststellen ob ausreichend viele Standpunkte innerhalb des Bedienbereiches (AA) berücksichtigt wurden und weiter mit Schritt e) oder Ermitteln eines weiteren möglichen Standpunkts (P2),
d) Durchführen von Schritt b) auf den weiteren Standpunkt (P2),
e) Ermitteln der von dem Bedienbereich (AA) sichtbaren Anlagenteile durch Auswerten der Ergebnisse aus Schritt b) und
f) Umsetzen der Ergebnisse aus Schritt e) durch Hinzufügen von Aufrufen von geeigneten Sicherheitsfunktionen zu einer Nothalt-Knopf-Aktivierung.

2. Verfahren nach Patentanspruch 1,
**dadurch gekennzeichnet, dass**
der Bedienbereich relevant ist für die Anbringung einer Betätigungseinrichtung um die in dem sichtbaren Wirkungsbereich befindlichen Anlagenteile in einen Nothalt-Zustand zu überführen.

3. Verfahren nach Patentanspruch 1 oder 2
**dadurch gekennzeichnet, dass**
ein Anlagenteil weitere Informationen zu dem Anlagenteil enthält, welche sich auf die Überführung des jeweiligen Anlagenteils in einen Nothalt-Zustand beziehen, insbesondere der hierfür benötigte Energiebedarf oder Informationen zur Bewegungsmöglichkeit des Anlagenteils oder Funktionen, die die Überführung des Anlagenteils in einen Nothalt-Zustand ermöglichen.

4. Verfahren nach einem der Patentanspruch 1 bis 3,
**dadurch gekennzeichnet, dass**
die Berechnung in einer zentralen übergeordneten Instanz der Anlage durchgeführt wird.

5. Verfahren nach einem der Patentanspruch 1 bis 3,
**dadurch gekennzeichnet, dass**
die Berechnung in dezentral in zumindest einem der betroffenen Anlagen-Teile durchgeführt wird, wobei
die ermittelten Informationen an weitere Anlagenteile gesendet werden zur weiteren Berechnung des Wirkungsbereichs durch jeden Anlagenteil und
Empfang der Berechnungsergebnisse der weiteren Anlagen-Teile nach durchgeführter Berechnung.

6. Verfahren nach Patentanspruch 5
**dadurch gekennzeichnet, dass**
die in Schritt b) durchzuführenden Berechnungen in zumindest einer weiteren, von den Anlagenteilen verschiedenen, Recheneinheit ausgelagert sind.

7. Verfahren nach einem der vorherigen Patentansprüche,
**dadurch gekennzeichnet, dass**
zunächst eine an einem Anlagenteil angebrachte Betätigungseinrichtung (B1 ... B4, B12 ... B18) ermittelt wird und
auf Grund der Betätigungseinrichtung ein zugehöriger Bedienbereich (AA) bestimmt wird.

8. Verfahren nach einem der Patentansprüche 3 bis 7,
**dadurch gekennzeichnet, dass**
zur Berechnung der nach Betätigung einer Betätigungseinrichtung anzuhaltenden Anlagenteile auch die weiteren Informationen zu dem jeweiligen Anlagenteil berücksichtigt werden.

9. Verfahren nach einem der vorherigen Patentansprüche,
**dadurch gekennzeichnet, dass**
nach Änderung zumindest eines der zugrunde liegenden Modelle des Raumes oder der Anlage eine Neuberechnung erfolgt, indem basierend auf den bereits durchgeführten Berechnungen eine Korrektur der Ergebnisse erfolgt, indem nur der geänderte Anlagenteil mit Hilfe des Strahlverfolgungsalgorithmus neu berechnet wird.

10. Verfahren nach Patentanspruch 9,
**dadurch gekennzeichnet, dass**
anhand des neu berechneten Ergebnisses der Wirkungsbereich weitere Anlagenteile neu berechnet werden muss.

11. Vorrichtung geeignet zur Durchführung eines der Verfahren gemäß Patentanspruch 1 bis 10.

## Claims

1. Method for determining an effective area of an emergency stop button in an operating area (AA) inside an industrial installation, consisting of individual installation parts (B1 ... B4, B12 ... B18) which are operatively connected to one another and are distributed in a space,
using a first three-dimensional model for the space comprising the installation, and
using a second three-dimensional model for the outer boundaries for each installation part taking into account the visibility of the respective installation part (B1 ... B4, B12 ... B18), and
information relating to the spatial orientation of the installation parts in the model of the space,
having the following steps of:
a) determining a first possible viewpoint (P1) inside the operating area (AA),
b) determining the installation parts visible from this viewpoint (P1) on the basis of the first model of the space and the second model of the installation parts and the information relating to the orientation of the installation parts with the aid of a ray tracing algorithm (V),
c) determining whether a sufficient number of viewpoints inside the operating area (AA) has been taken into account and continuing with step e) or determining a further possible viewpoint (P2),
d) carrying out step b) for the further viewpoint (P2),
e) determining the installation parts visible from the operating area (AA) by evaluating the results from step b), and
f) implementing the results from step e) by adding calls of suitable safety functions to emergency button activation.

2. Method according to Patent Claim 1,
**characterized in that**
the operating area is relevant to fitting an actuation device in order to change the installation parts in the visible effective area to an emergency stop state.

3. Method according to Patent Claim 1 or 2,
**characterized in that**
an installation part contains further information relating to the installation part, which information relates to the changing of the respective installation part to an emergency stop state, in particular the energy requirement needed for this purpose or information relating to the possible movement of the installation part or functions which make it possible to change the installation part to an emergency stop state.

4. Method according to one of Patent Claims 1 to 3,
**characterized in that**
the calculation is carried out in a central superordinate entity of the installation.

5. Method according to one of Patent Claims 1 to 3,
**characterized in that**
the calculation is carried out in a decentralized manner in at least one of the installation parts affected, wherein
the determined information is transmitted to further installation parts for the further calculation of the effective area by each installation part, and
the calculation results are received from the further installation parts after the calculation has been carried out.

6. Method according to Patent Claim 5,
**characterized in that**
the calculations to be carried out in step b) are transferred to at least one further computing unit which differs from the installation parts.

7. Method according to one of the preceding patent claims,
**characterized in that**
firstly an actuation device (B1 ... B4, B12 ... B18) fitted to an installation part is determined and an associated operating area (AA) is determined on the basis of the actuation device.

8. Method according to one of Patent Claims 3 to 7,
**characterized in that**
in order to calculate the installation parts to be stopped after actuation of an actuation device, the further information relating to the respective installation part is also taken into account.

9. Method according to one of the preceding patent claims,
**characterized in that**
after at least one of the underlying models of the space or of the installation has been changed, a recalculation is carried out by correcting the results on the basis of the calculations which have already been carried out by recalculating only the changed installation part with the aid of the ray tracing algorithm.

10. Method according to Patent Claim 9,
**characterized in that**
the effective area of further installation parts must be recalculated using the recalculated result.

11. Apparatus suitable for carrying out one of the methods according to Patent Claims 1 to 10.

## Revendications

1. Procédé de détermination d'une zone d'action d'un bouton d'arrêt d'urgence dans une zone de commande (AA) à l'intérieur d'une installation industrielle, composée de parties d'installation (B1, ... B4, B12 ... B18) réparties dans une salle, coopérant entre elles individuellement,
comprenant un premier modèle tridimensionnel pour la salle comprenant l'installation, et
comprenant un second modèle tridimensionnel pour les délimitations extérieures pour chaque partie d'installation en tenant compte de la visibilité de la partie d'installation (B1, ... B4, B12 ... B18) respective, et
des informations pour l'orientation physique des parties d'installation dans le modèle de la salle,
comprenant les étapes suivantes :
a) détermination d'un premier point de vue (P1) possible à l'intérieur de la zone de commande (AA),
b) détermination des parties d'installation visibles depuis ce point de vue (P1) en se basant sur le premier modèle de la salle et le second modèle des parties d'installation ainsi que les informations sur l'orientation des parties d'installation à l'aide d'un algorithme de suivi de faisceau (V),
c) détermination si suffisamment de points de vue à l'intérieur de la zone de commande (AA) ont été pris en compte et poursuite avec l'étape e) ou détermination d'un autre point de vue (P2) possible,
d) exécution de l'étape b) sur l'autre point de vue (P2)
e) détermination des parties d'installation visibles depuis la zone de commande (AA) par évaluation des résultats de l'étape b) et
f) mise en œuvre des résultats de l'étape e) par ajout de lancements de fonctions de sécurité appropriées pour une activation du bouton d'arrêt d'urgence.

2. Procédé selon la revendication 1, **caractérisé en ce que** la zone de commande est pertinente pour l'intégration d'un dispositif d'actionnement pour faire passer les parties d'installation se trouvant dans la zone d'action visible à un état d'arrêt d'urgence.

3. Procédé selon la revendication 1 ou 2, **caractérisé en ce qu'**une partie d'installation contient d'autres informations relatives à la partie d'installation, qui se rapportent au passage de la partie d'installation respective à un état d'arrêt d'urgence, en particulier le besoin d'énergie nécessaire à cela ou des informations sur la possibilité de déplacement de la partie d'installation ou de fonctions qui permettent de faire passer la partie d'installation à un état d'arrêt d'urgence.

4. Procédé selon l'une des revendications 1 à 3, **caractérisé en ce que** le calcul est effectué dans une instance centrale supérieure de l'installation.

5. Procédé selon l'une des revendications 1 à 3, **caractérisé en ce que** le calcul est effectué de manière décentralisée dans au moins une des parties d'installation concernées, dans lequel
les informations déterminées sont envoyées à d'autres parties d'installation pour la poursuite du calcul de la zone d'action par chaque partie d'installation et
réception des résultats de calcul des autres parties d'installation après exécution du calcul.

6. Procédé selon la revendication 5, **caractérisé en ce que**
les calculs effectués à l'étape b) sont stockés dans au moins une autre unité de calcul différente des parties d'installation.

7. Procédé selon l'une des revendications précédentes, **caractérisé en ce que**
tout d'abord un dispositif d'actionnement (B1, ... B4, B12... B18) appliqué à une partie d'installation est déterminé, et en raison du dispositif d'actionnement, une zone de commande (AA) correspondante est déterminée.

8. Procédé selon l'une des revendications 3 à 7, **caractérisé en ce que**
pour calculer les parties d'installation à arrêter après actionnement d'un dispositif d'actionnement, les autres informations relatives à la partie d'installation respective sont également prises en compte.

9. Procédé selon l'une des revendications précédentes, **caractérisé en ce qu'**après modification d'au moins un des modèles de base de la salle ou de l'installation, un nouveau calcul est effectué, **en ce qu'**en se basant sur les calculs déjà effectués, une correction des résultats est effectuée, **en ce que** seule la partie d'installation modifiée est de nouveau calculée à l'aide de l'algorithme de suivi de faisceau.

10. Procédé selon la revendication 9, **caractérisé en ce qu'**à l'aide du résultat recalculé, la zone d'action d'autres parties d'installation doit de nouveau être calculée.

11. Dispositif approprié pour la réalisation d'un des procédés selon la revendication de brevet 1 à 10.
